# EUROPÄISCHE PATENTSCHRIFT

(11) **EP 1 488 140 B1**
(45) Veröffentlichungstag und Bekanntmachung des Hinweises auf die Patenterteilung: **25.04.2012**
(21) Anmeldenummer: 03720218.1
(22) Anmeldetag: 20.03.2003
(51) Int. Cl.: F16H 59/10

(54) **SCHALTVORRICHTUNG ZUR STEUERUNG DER GANGWAHL EINES KRAFTFAHRZEUGGETRIEBES**
GEARSHIFT DEVICE FOR CONTROLLING THE GEAR SELECTION OF A MOTOR VEHICLE GEARBOX
DISPOSITIF DE SELECTION POUR COMMANDER LA SELECTION DE RAPPORTS D'UNE BOITE DE VITESSES D'AUTOMOBILE

(30) Priorität: 26.03.2002 DE 10213763
(43) Veröffentlichungstag der Anmeldung: 22.12.2004
(73) Patentinhaber: ZF Lemförder Metallwaren AG, 49448 Lemförde (DE)
(72) Erfinder: ERSOY, Metin, 65396 Walluf (DE)
(86) Internationale Anmeldenummer: PCT/DE2003/000922
(87) Internationale Veröffentlichungsnummer: WO 2003/081088

(56) Entgegenhaltungen:
- EP-A- 0 787 625
- EP-A- 0 844 418
- EP-A- 0 846 898
- EP-A- 1 046 839
- EP-A- 1 077 337
- DE-A- 19 621 404
- US-B1- 6 209 408

## Beschreibung

Die Erfindung betrifft eine Schaltvorrichtung zur Steuerung der Gangwahl eines Kraftfahrzeuggetriebes gemäß den im gattungsbildenden Teil des Anspruches 1 genannten Merkmalen.

Bei Schaltvorrichtungen der dort beschriebenen Art werden die durch die Abtastvorrichtung ermittelten Signale zur Kennzeichnung der einzelnen Gangpositionen üblicherweise dadurch ermittelt, dass an einer am Gehäuse angeordneten so genannten Leiterplatte optische Sensoren oder magnetische Hallgeber für jede einzelne Gangposition angeordnet sind. Bei einer Verschwenkung des Schalthebels und somit der Abdeckplatte von einer Gangposition zur anderen wird gleichzeitig ein an der schwenkbaren Abdeckplatte befestigter Magnet oder optischer Signalgeber bewegt, der beim Erreichen der jeweils gewählten Gangposition im zugehörigen Sensor ein Steuersignal generiert.

Da automatische Getriebe in zunehmendem Maße mit zusätzlichen Gangpositionen versehen werden, wobei bis zu zehn unterschiedliche Hallsensoren, optische Sensoren, Mikroschalter oder Potentiometer die einzelnen Gangpositionen abtasten, ist leicht vorstellbar, dass die Kosten der Schaltvorrichtung durch den erhöhten Herstellungsaufwand beim Zusammenbau der zahlreichen Einzelbauteile nicht unerheblich sind, wobei zusätzlich die Einzelkosten der Bauteile berücksichtigt werden müssen.

Aus der US 6,209,408 B1 ist eine Schaltungsanordnung zur Betätigung eines Kraftfahrzeuggetriebes mit einem Gangwählhebel bekannt bei der zur Erfassug der Position des Gangwählhebels eine elektrische Sensoreinrichtung vorgesehen ist, die mit einer Steuereinrichtung zur Betätigung des Getriebes verbunden ist. Ausgehend von der über die Sensoreinrichtung erfassten Position des Gangwählhebels werden die entsprechenden Schaltvorgänge ausgelöst. In einer Ausführung ist vorgesehen, die Position des Gangwählhebels über einen auf einer bogenförmigen Fläche der Schaltungsanordnung angeordneten Barcode-Streifen, der von einem mit dem Gangwählhebel verbundenen Barcode- Leser / -Sensor überstrichen wird, zu erfassen.

Aufgabe der vorliegenden Erfindung ist es, eine Schaltvorrichtung der gattungsgemäßen Art dahingehend weiterzubilden, dass deren Herstellkosten gesenkt werden können, wobei Funktion und Zuverlässigkeit auch höchsten Ansprüchen im Hinblick auf leichte und komfortable Bedienung genügen müssen.

Diese Aufgabe wird erfindungsgemäß in Zusammenschau mit den gattungsbildenden Merkmalen des Anspruches 1 durch die im kennzeichnenden Teil offenbarte technische Lehre gelöst.

Ein Erfindungsgedanke ist es, dass die Abtastvorrichtung einen am Gehäuse ortsfest angeordneten Sensor und eine linienförmige, die Sensorposition beim Verschwenken der Abdeckplatte durchlaufende mit Markierungspunlcten für die einzelnen Gangpositionen versehene Signalgebereinheit an dieser schwenkbaren Abdeckplatte aufweist, wobei die vom Sensor aufgenommenen Signale einer zugehörigen Prozessoreinheit zur Auswertung und Weiterleitung zugeführt werden. Die neuartige Gestaltung der Abtastvorrichtung macht eine maßgebliche Reduzierung der für die Gangpositionsbestimmung maßgeblichen Abtastvorrichtung verwendeten Bauteile möglich. Diese Reduzierung bewirkt nicht nur eine Herabsetzung der Bauteil- und Montagekosten, sondern führt darüber hinaus auch zu reduzierten Anforderungen an den Herstellprozess in Bezug auf die Genauigkeit der Fixierung der einzelnen Bauelemente, da weniger Bauteile zu platzieren sind.

Die bislang aus dem Stand der Technik bekannten Schaltvorrichtungen besitzen die zur Abtastvorrichtung gehörenden zahlreichen Sensoren angeordnet auf einer so genannten Leiterplatte, auf die sie im Rahmen einzelner Lötprozesse zu montieren sind. Bei der erfindungsgemäßen Gestaltung der Schaltvorrichtung ist nunmehr nur noch die Platzierung eines Sensors am Gehäuse bzw. einer an Gehäuse festgelegten separaten Leiterplatte notwendig, wobei zusätzlich vorteilhaft ist, dass die linienförmig gestaltete Signalgebereinheit an der Abdeckplatte in Bezug auf das Durchlaufen der Abtastposition des korrespondierenden Sensors durch entsprechende Größenauswahl toleranz-unempfindlich gestaltet werden.

Besondere Ausgestaltungen des Gegenstandes der Erfindung ergeben sich zusammen mit der technischen Lehre des Anspruches 1 aus den Merkmalen der Unteransprüche.

Es hat sich im Zuge einer geeigneten Realisierung als zweckmäßig erwiesen, wenn die linienförmige Signalgebereinheit eine Mehrzahl von den Gangpositionen entsprechenden optischen Markierungen aufweist und der Sensor als optischer Sensor ausgebildet ist, da sich diese spezielle Ausgestaltung mit einfachen produktionstechnischen Mitteln realisieren lässt und entsprechende optische Sensoren am Markt günstig verfügbar sind. Als Weiterbildung des optischen Abtastprinzips besteht die Möglichkeit, die Sensoreinheit als Laserabtasteinheit auszubilden, welche einen auch als Barcode bezeichneten Strichcode, als der die Signalgebereinheit ausgebildet ist, abtastet.

Darüber hinaus ist denkbar, die optischen Markierungen der Signalgebereinheit als reflektierende Strichmarkierung auszubilden.

Alternativ zu dem optischen Abtastprinzip kann für bestimmte Anwendungsfälle die linienförmige Signalgebereinheit in Form eines Magnetstreifens eine Mehrzahl von magnetischen Markierungen aufweisen, wobei der zugehörige Sensor als Hallsensor ausgebildet ist. Das magnetische Abtastprinzip hat sich dabei in Bezug auf Zuverlässigkeit bei Schaltvorrichtungen von Kraftfahrzeuggetrieben durchaus bewährt, so dass bei einer erfindungemäßen Reduzierung der Bauteile eine kostengünstige Herstellung der Gesamtschaltvorrichtung gegeben ist.

Da bei Kraftfahrzeuggetrieben neuerer Bauart, insbesondere automatischen Getrieben, neben der Gangwahl bestimmter Automatikwählbereiche, welche üblicherweise mit 2, 3, 4, D, R, N usw. gekennzeichnet sind, sich auch die halbautomatische Gangwahl durch den Benutzer im Rahmen eines Herauf- und Herunterschaltens der Gänge durch Antippen des Schalthebels durchgesetzt hat, wobei das Herauf- und Herunterschalten in einer zweiten vertikalen Schaltebene oder Schaltgasse des Schalthebels erfolgt, in der dieser durch ein Verschwenken senkrecht zur ersten vertikalen Schwenkebene gebracht wird, sieht die Erfindung weiterhin vor, dass die Abtastvorrichtung einen zusätzlichen am Gehäuse ortsfest angeordneten Sensor aufweist, der die Gangpositionen in dieser weiteren vertikalen Schwenkebene des Schalthebels abtastet, wobei die linienförmige Signalgebereinheit die Sensorposition dieses weiteren Sensors bei Verschwenkung des Schalthebels in die weitere Bewegungsebene korrespondierend durchläuft. Alternativ hierzu kann eine weitere linienförmige Signalgebereinheit an der beweglichen Abdeckplatte angeordnet sein, die beim Verschwenken des Schalthebels in der zweiten Schaltebene die erforderlichen Gangpositionsabtastsignale generiert.

Vorhandene Toleranzen und mögliches, durch Abnutzung hervorgerufenes Spiel innerhalb des Schwenkbewegungsweges des Schalthebels lässt sich darüber hinaus entsprechend einer vorteilhaften Weiterbildung dadurch kompensieren, dass die Abtastvorrichtung einen weiteren Initialisiersensor aufweist und dass an der schwenkbaren Abdeckplatte ein in der Neutral- oder Parkposition der Schaltvorrichtung mit diesem Sensor korrespondierender Signalgeber vorhanden ist. Durch diese Gestaltung kann bei jeder Rückführung des Schalthebels in die Neutral- oder Parkposition durch das Zusammenspiel des zusätzlichen Initialisiersensors und des zusätzlichen Signalgebers durch das bei der Aufnahme des entsprechenden Park- oder Neutralstellungssignals durch den Initialisiersensor zusätzlich gewonnene Signal und die Verarbeitung des Signals in der zugehörigen Prozessoreinheit eine neue Nullstellung generiert werden, von der aus die einzelnen Gangpositionen, die im Rahmen der Verschwenkung des Schalthebels durchlaufen werden, eindeutig zuzuordnen sind.

Der oder die oben beschriebenen Sensoren zur Erfassung der einzelnen Gangpositionen, zur Initialisierung der Schaltvorrichtung sowie zur Aufnahme von Signalen, die durch die Bewegung des Schalthebels in einer zweiten Schwenkebene generiert werden, lassen sich zweckmäßigerweise mit der zugehörigen Prozessoreinheit auf einer separat am Getriebe angeordneten, gekrümmten Leiterplatte festlegen. Diese Leiterplatte kann in einem vorgeschalteten Produktionsschritt vor dem Zusammenbau der Schaltvorrichtung hergestellt und getestet werden, so dass sich der eigentliche Montageaufwand der Schaltvorrichtung reduziert.

Die Herstellkosten lassen sich darüber hinaus dadurch herabsetzen, dass die schwenkbare Abdeckplatte nicht als separates am Schalthebel angeordnetes Bauteil ausgebildet wird, sondern gleichzeitig als jalousieförmiges Bauelement zur Abdeckung der den Schalthebel aufnehmenden Ausnehmung im Gehäuse fungiert.

Nachfolgend wird ein Ausführungsbeispiel des Gegenstandes der Erfindung anhand der beigefügten Zeichnungen näher erläutert.

Es zeigt:
- Figur 1a: eine perspektivische Teilansicht einer erfindungsgemäßen Schaltvorrichtung im Bereich des Schalthebels mit den zugehörigen Bewegungsebenen,
- Figur 1b: eine perspektivische Detailansicht des beweglichen Schalthebels mit angrenzenden Bauteilen in der ersten Schwenkebene und

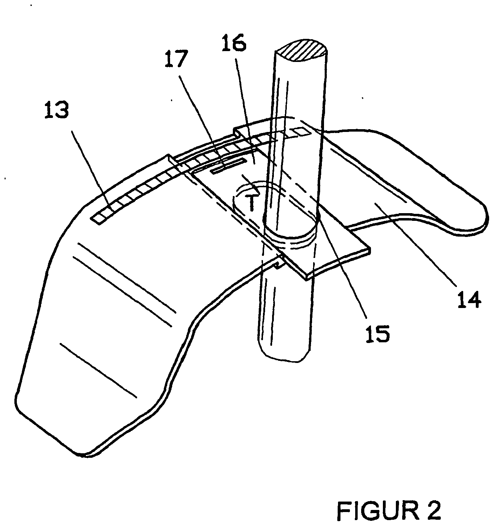

- Figur 2: eine perspektivische Detailansicht des beweglichen Schalthebels mit angrenzenden Bauteilen in der zweiten Schwenkebene.

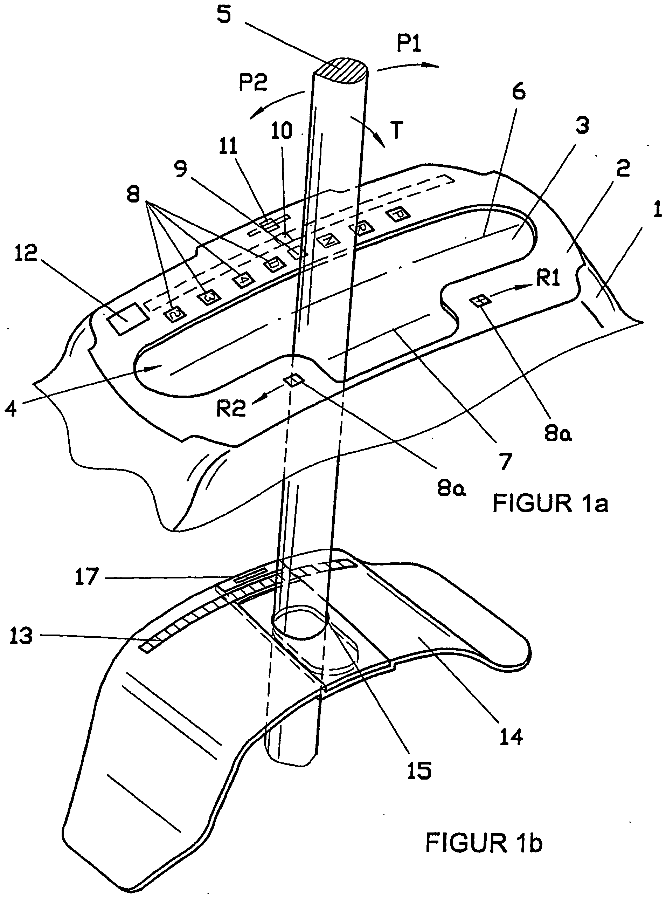

Die in der Figur 1 a gezeigte Darstellung der Schaltvorrichtung zur Steuerung der Gangwahl eines Kraftfahrzeuggetriebes zeigt als wesentliche Elemente einen Teil des Gehäuses 1, an dessen Oberseite eine gekrümmte Leiterplatte 2 angeordnet ist. Die Leiterplatte 2 dient als Trägerelement für im Folgenden näher aufgeführte Bauteile und weist einen im Mittenbereich der Leiterplatte 2 gelagerten Durchbruch 3 auf. An diesen Durchbruch 3 schließt sich zum Innern des Gehäuses 1 eine Ausnehmung 4 an, in der ein Schalthebel 5 bewegbar gelagert angeordnet ist. Die Beweglichkeit des Schalthebels 5 erstreckt sich im Wesentlichen auf eine erste vertikale Schwenkebene 6, deren Lage in der Figur 1a gestrichelt dargestellt ist und in welcher sich der Schalthebel 5 vom Bediener des Kraftfahrzeuges in Richtung der Pfeile P1 und P2 verschwenken lässt. Parallel zur ersten Schwenkebene 6 weist die Schaltvorrichtung eine weitere parallel hierzu angeordnete zweite Schwenkebene 7 auf, in welcher sich der Schalthebel 5 in Richtung der Pfeile R1 und R2 bewegen lässt. Die Verschiebung des Schalthebels 5 von der Schwenkebene 6 zur Schwenkebene 7 erfolgt durch Verschiebung des Schalthebels 5 in Richtung des Pfeiles T.

Wie dies der Figur 1a zu entnehmen ist, sind auf der als Trägerelement dienenden Leiterplatte 2 eine Anzahl von im Wesentlichen elektronischen Komponenten enthalten. So besitzt die Leiterplatte 2 zur Verdeutlichung der einzelnen Positionen des Schalthebels 5, die jeweils eine Gangposition kennzeichnen, eine Anzahl von beleuchteten Positionsfeldern 8 und 8a. An der Oberseite der mit 8 bezeichneten Positionsfelder sind entsprechende Gangpositionsbezeichnungen wie P, R, N, D, 4, 3, 2 angegeben, wobei die Positionsfelder 8a mit "+" und "-" gekennzeichnet sind und dadurch die Gangpositionen für ein manuelles Herauf- bzw. Herunterschalten der Gänge des angeschlossenen Kraftfahrzeuggetriebes kennzeichnen.

Zusätzlich befindet sich auf der Leiterplatte 2 an deren Unterseite eine Reihe mit drei nebeneinander angeordneten Sensoren 9, 10 und 11 sowie eine Prozessoreinheit 12 zur Verarbeitung von durch die Sensoren 9, 10 und 11 bereitgestellten Daten, wobei die Prozessoreinheit durch einen üblichen Mikrochip oder CAN-Prozessor gebildet ist. Die Sensoren 9, 10 und 11 können als optische Sensoren oder als Hallsensoren ausgebildet sein. Sie sind Bestandteil einer Abtastvorrichtung zur Erkennung der Gangposition des Schalthebels und wirken zusammen mit einer linienförmigen Signalgebereinheit 13, welche auf einer Abdeckplatte 14 an deren zur Leiterplatte gerichteten Oberseite angeordnet ist.

Die Abdeckplatte 14 ist als Einzelteil zusammen mit dem Schalthebel 5 in der Figur 1b dargestellt und weist einen Schieber 16 mit einem kreisförmigen Durchbruch 15 auf.

Der Schieber 16 ist in Richtung des Pfeiles T aus Figur 1a verschieblich in Richtung des Pfeiles T aus Figur 1a an der Abdeckplatte 14 in einer geeigneten Aufnahme angeordnet, wobei durch den Durchbruch 15 der Schaft des Schalthebels 5 geführt ist.

Die Signalgebereinheit 13 ist auf der Abdeckplatte 14 so angeordnet, dass bei einer Verschwenkung des Schalthebels 5 in der Schwenkebene 6 die Signalgebereinheit 13 die Sensorposition des Sensors 10 kreuzt. Dies ist durch die gestrichelte Darstellung in der Figur 1a verdeutlicht. Die Signalgebereinheit 13 besitzt eine Mehrzahl von Markierungen in Form von quer zur Schwenkebene 6 verlaufenden Strichen, die von dem zugehörigen optisch arbeitenden Sensor 10 erkannt werden können. Eine Verschwenkung des Schalthebels 5 innerhalb der Schwenkebene 6 führt somit durch das Überstreichen der Signalgebereinheit 13 über den Abtastbereich des Sensor 10 zu einer Anzahl von Signalimpulsen, die der Prozessoreinheit 12 über hier nicht näher dargestellte Leiterbahnen auf der Leiterplatte 2 zugeleitet werden, dort gezählt und ausgewertet werden, so dass sich aus der Anzahl der empfangenen Signalimpulse exakt die Gangposition des Schalthebels 5 ermitteln lässt. Neben dem Sensor 10 befindet sich auf der Leiterplatte 2 ein Sensor 11, der die Aufgabe hat, die Nullposition des Schalthebels 5 zu initialisieren. Hierzu korrespondierend ist auf dem Schieber 16 der Abdeckplatte 14 ein weiteres längliches Signalgeberelement 17 angeordnet. Auf diese Weise können toleranzbehaftete Ungenauigkeiten der Gangposition bei jedem Durchfahren der Neutral- oder Parkposition (N, P) zur Eichung der Abtastvorrichtung genutzt werden.

Auf der dem Sensor 11 gegenüberliegenden Seite des Sensors 10 ist der Sensor 9 angeordnet, der für Abtastung der Gangposition zuständig ist, sobald der Schalthebel 5 in die Schwenkebene 7 verlagert und dort in Richtung der Pfeile R1 und R2 bewegt wird. Durch die Bewegung des Schalthebels 5 in Richtung des Pfeiles T verlagert sich die Position der Signalgebereinheit 17 zusammen mit dem Schieber 16, so dass sie nunmehr mit den auf ihr angeordneten Strichmarkierungen den Sensor 9 mit entsprechenden Signalimpulsen versorgt.

Somit wird mittels eines zentralen Sensors 10 sowie den ergänzenden Sensoren 9 und 11 und der Signalgebereinheit 13 sowie der Signalgebereinheit 17 eine Abtastvorrichtung geschaffen, welche mit einfachsten Mitteln und wenigen Bauteilen alle Gangpositionen des Schalthebels 5 erfassen und über die Prozessoreinheit 12 aufbereitet auf elektronischem Wege an das zugehörige Kraftfahrzeuggetriebe weitergeben kann. Die Abtastvorrichtung in ihrer Kombination aus Sensoren 9, 10, 11 und Signalgebereinheiten 13, 17 kann hierbei beispielsweise auf dem optischen Prinzip basieren, wie dies bislang beschrieben wurde und welches durch die Ausgestaltung der Signalgebereinheiten 13 und 17 mit jeweils einer Strichmarkierung zum Ausdruck kommt. Eine spezielle Art des optischen Prinzips kann dabei verwirklicht werden durch das Aufbringen eines auch als Barcode bezeichneten Strichcodes auf der Signalgebereinheit und der Ausbildung der Sensoren 9, 10 und 11 als Mikrolasereinheiten.

Eine andere Verwirklichung des Abtastprinzips besteht in der so genannten magnetischen Abtastung. Hierbei ist die Signalgebereinheit als Magnetstreifen mit zahlreichen magnetischen Einzelmarkierungen versehen und wird durch als so genannte Hallsonden ausgebildete Sensoren abgetastet. Das Erkennungsprinzip ist in beiden Fällen das Gleiche, da jeweils die durch die Abtastvorrichtung gewonnenen Signalimpulse innerhalb der Prozessoreinheit 12 aufbereitet werden, so dass eine eindeutige Erkennung der einzelnen Gangpositionen verwirklicht wird.

Um die Abtastsicherheit zusätzlich zu erhöhen, kann es als spezielle Ausgestaltungsvariante denkbar sein, die Sensoren 9 und 10 in doppelter Ausführung auf der Leiterplatte 2 anzuordnen, so dass durch diese Zweifachariordnung eine Redundanz der Signalerkennung herbeigeführt wird.

Die Gangpositionserkennung mittels der Sensoren 9 und 10 kann auch dadurch bewirkt werden, dass bei einem Verschwenken des Schalthebels 5 in Richtung des Pfeiles T die Abdeckplatte 14 ebenfalls in die betreffende Richtung bewegt wird, so dass die Signalgebereinheit 13 mit dem Sensor 9 zusammenwirken kann. In diesem Fall entfällt der Schieber 16 und der Schalthebel 5 ist direkt durch einen kreisförmigen Durchbruch in der Abdeckplatte 14 geführt. Der Signalgeber 17 befindet sich in diesem beschriebenen Ausgestaltungsbeispiel direkt auf der Abdeckplatte 14.

### Bezusszeichenliste

- 1.: Gehäuse
- 2.: Leiterplatte
- 3.: Durchbruch
- 4.: Ausnehmung
- 5.: Schalthebel
- 6.: Schwenkebene
- 7.: Schwenkebene
- 8.: Positionsfeld
- 8a: Positionsfeld
- 9.: Sensor
- 10.: Sensor
- 11.: Sensor
- 12.: Prozessoreinheit
- 13.: Signalgebereinheit
- 14.: Abdeckplatte
- 15.: Durchbruch
- 16.: Schieber
- 17.: Signalgebereinheit

## Patentansprüche

1. Schaltvorrichtung zur Steuerung der Gangwahl eines Kraftfahrzeuggetriebes mit einem Gehäuse, einem innerhalb einer Ausnehmung des Gehäuses angeordneten,
in mindestens einer vertikalen Ebene schwenkbaren Schalthebel, einer durch Koppelung mit dem Schalthebel der Schwenkbewegung des Schalthebels folgenden Abdeckplatte und einer aus Sensoren und zugehörigen Signalgebern bestehenden Abtytvorrichtung für die Erfassung der einzelnen Gangpositionen des Getriebes, **dadurch gekennzeichnet, dass** die Abtastvorrichtung mindestens einen am Gehäuse (1) ortsfest angeordneten Sensor (10) und eine linienförmige, den Abtastbereich des Sensors (10) bei Bewegung der Abdeckplatte (14) überstreichende, mit Markierungspunkten für die Gangpositionen versehene Signalgebereinheit (13) an der schwenkbaren Abdeckplatte (14) aufweist, wobei die vom Sensor (10) aufgenommenen Signale für die Gangpositionen einer zugehörigen Prozessoreinheit (12) zur Auswertung und Weiterleitung zugeführt werden, und dass die Abtastvorrichtung einen zusätzlichen am Gehäuse (1) ortsfest angeordneten Sensor (9) aufweist, der die Gangpositionen in einer weiteren vertikalen Schwenkebene (7) des Schalthebels (5) abtastet, wobei eine weitere linienförmig Signalgebereinheit (17) den Abtastbereich dieses weiteren Sensors (9) bei Verschwenkung des Schalthebels (5) in die weitere
Bewegungsebene (7) durchläuft.

2. Schaltvorrichtung nach Anspruch 1, **dadurch gekennzeichnet, dass** die linienförmige Signalgebereinheit (13) eine Mehrzahl von den Gangpositionen
entsprechenden optischen Markierungen aufweist und der Sensor (10) als optischer Sensor ausgebildet ist.

3. Schaltvorrichtung nach Anspruch 2, **dadurch gekennzeichnet, dass** die Signalgebereinheit (13) einen Strichcode (Barcode) aufweist und der Sensor als Laserabtasteinheit ausgebildet ist.

4. Schaltvorrichtung nach Anspruch 1, **dadurch gekennzeichnet, dass** die linienförmige Signalgebereinheit (13) in Form eines Magnetstreifens mit einer Mehrzahl von magnetischen Markierungen ausgebildet ist und der Sensor (10) als Hallsensor ausgebildet ist.

5. Schaltvorrichtung nach Anspruch 2, **dadurch gekennzeichnet, dass** die optischen Markierungen der Signalgebereinheit (13) als reflektierende Strichmarkierung ausgebildet sind.

6. Schaltvorrichtung nach einem der Ansprüche 1 bis 5, **dadurch gekennzeichnet, dass** die Abtastvorrichtung einen zusätzlichen am Gehäuse (1) ortsfest angeordneten Sensor (9) aufweist, der die Gangpositionen in einer weiteren vertikalen Schwenkebene (7) des Schalthebels (5) abtastet, wobei die linienförmige Signalgebereinheit (13) den Abtastbereich dieses weiteren Sensors (9) bei Verschwenkung des Schalthebels (5) in die weitere Bewegungsebene (7) durchläuft.

7. Schaltvorrichtung nach einem der vorgenannten Ansprüche, **dadurch gekennzeichnet, dass** die Abtastvorrichtung einen weiteren Initialisiersensor aufweist und dass an der schwenkbaren Abdeckplatte (14) eine in der Neutral- oder Parkposition der Schaltvorrichtung mit diesem Sensor korrespondierende Signalgebereinheit (17) vorhanden ist.

8. Schaltvorrichtung nach einem der vorangegangenen Ansprüche, **dadurch gekennzeichnet, dass** der oder die Sensor(en) (9, 10) zur Erfassung der einzelnen Gangpositionen und die zugehörige Prozessoreinheit (12) zur Auswertung der aufgenommenen Signale auf einer am Getriebe angeordneten gekrümmten Leiterplatte (2) festgelegt sind.

9. Schaltvorrichtung nach einem der vorgenannten Ansprüche **dadurch gekennzeichnet, dass** die Abdeckplatte (14) als jalousieförmiges Bauelement zur Abdeckung der den Schalthebel (5) aufnehmenden Ausnehmung (4) im Gehäuse (1) ausgebildet ist.

## Claims

1. Shift device for controlling the selection of gears in a motor vehicle gearbox, having a housing, having a shift lever which is arranged within a recess of the housing and which is pivotable in at least one vertical plane, having a cover plate which follows the pivoting movement of the shift lever by virtue of its being coupled to the shift lever, and having a sensing device, composed of sensors and associated signal transmitters, for detecting the individual gear positions of the gearbox, **characterized in that** the sensing device has at least one sensor (10) arranged in a positionally fixed manner on the housing (1) and has a linear signal transmitter unit (13), which passes over the sensing field of the sensor (10) as the cover plate (14) moves and which is provided with marker points for the gear positions, on the pivotable cover plate (14), wherein the signals recorded by the sensor (10) for the gear positions are supplied to an associated processor unit (12) for evaluation and inward transmission, and **in that** the sensing device has an additional sensor (9) which is arranged in a positionally fixed manner on the housing (1) and which senses the gear positions in a further vertical pivot plane (7) of the shift lever (5), therein a further linear signal transmitter unit (17) passes through the sensing field of said further sensor (9) as the shift lever (5) pivots into the further movement plane (7).

2. Shift device according to Claim 1, **characterized in that** the linear signal transmitter unit (13) has a multiplicity of optical markers which correspond to the gear positions, and the sensor (10) is designed as an optical sensor.

3. Shift device according to Claim 2, **characterized in that** the signal transmitter unit (13) has a barcode and the sensor is designed as a laser scanner unit.

4. Shift device according to Claim 1, **characterized in that** the linear signal transmitter unit (13) is in the form of a magnetic strip with a multiplicity of magnetic markers, and the sensor (10) is designed as a Hall sensor.

5. Shift device according to Claim 2, **characterized in that** the optical markers of the signal transmitter unit (13) are formed as reflective strip markings.

6. Shift device according to one of Claims 1 to 5, **characterized in that** the sensing device has an additional sensor (9) which is arranged in a positionally fixed manner on the housing (1) and which senses the gear positions in a further vertical pivot plane (7) of the shift lever (5), therein the linear signal transmitter unit (13) passes through the sensing field of said further sensor (9) as the shift lever (5) pivots into the further movement plane (7).

7. Shift device according to one of the preceding claims, **characterized in that** the sensing device has a further initializing sensor, and **in that**, on the pivotable cover plate (14), there is provided a signal transmitter unit (17) which corresponds with said sensor in the neutral or park position of the shift device.

8. Shift device according to one of the preceding claims, **characterized in that** the sensor(s) (9, 10) for detecting the individual gear positions and the associated processor unit (12) for evaluating the recorded signals are fixed to a curved printed circuit board (2) arranged on the gearbox.

9. Shift device according to one of the preceding claims, **characterized in that** the cover plate (14) is formed as a louver-like component for covering the recess (4), which receives the shift lever (5), in the housing (1).

## Revendications

1. Dispositif de changement de rapport pour commander la sélection des rapports d'une boîte de vitesses de véhicule automobile, comprenant un boîtier, un levier de changement de vitesse disposé à l'intérieur d'un évidement du boîtier et qui peut pivoter dans au moins un plan vertical, une plaque de protection qui accompagne le mouvement de pivotement du levier de changement de vitesse par couplage avec le levier de changement de vitesse et un dispositif de palpage, constitué de capteurs et de codeurs de signal associés, pour la détection des positions des rapports individuels de la boîte de vitesses, **caractérisé en ce que** le dispositif de palpage présente au moins un capteur (10) disposé en un endroit fixe sur le boîtier (1) et une unité de codeur de signal (13) de forme rectiligne sur la plaque de protection (14) pivotante, qui balaye la zone de palpage du capteur (10) lors du mouvement de la plaque de protection (14), avec des points de repérage pour les positions des rapports, les signaux des positions des rapports acquis par le capteur (10) étant acheminés à une unité à processeur (12) pour interprétation et transmission, et **en ce que** le dispositif de palpage présente un capteur (9) supplémentaire disposé en un endroit fixe sur le boîtier (1), lequel palpe les positions des rapports dans un autre plan de pivotement vertical (7) du levier de changement de vitesse (5), une autre unité de codeur de signal (17) de forme rectiligne parcourant la zone de palpage de cet autre capteur (9) lors du pivotement du levier de changement de vitesse (5) dans l'autre plan de pivotement (7).

2. Dispositif de changement de rapport selon la revendication 1, **caractérisé en ce que** l'unité de codeur de signal (13) de forme rectiligne présente une pluralité de repères optiques correspondant aux positions des rapports et le capteur (10) est réalisé sous la forme d'un capteur optique.

3. Dispositif de changement de rapport selon la revendication 2, **caractérisé en ce que** l'unité de codeur de signal (13) présente un code à barres et le capteur est réalisé sous la forme d'une unité de palpage à laser.

4. Dispositif de changement de rapport selon la revendication 1, **caractérisé en ce que** l'unité de codeur de signal (13) de forme rectiligne est réalisée sous la forme d'une bande magnétique avec une pluralité de repères magnétiques et le capteur (10) est réalisé sous la forme d'un capteur à effet Hall.

5. Dispositif de changement de rapport selon la revendication 2, **caractérisé en ce que** les repères optiques de l'unité de codeur de signal (13) sont réalisés sous la forme d'un repère à bande réfléchissante.

6. Dispositif de changement de rapport selon l'une des revendications 1 à 5, **caractérisé en ce que** le dispositif de palpage présente un capteur (9) supplémentaire disposé en un endroit fixe sur le boîtier (1), lequel palpe les positions des rapports dans un autre plan de pivotement vertical (7) du levier de changement de vitesse (5), l'unité de codeur de signal (13) de forme rectiligne parcourant la zone de palpage de cet autre capteur (9) lors du pivotement du levier de changement de vitesse (5) dans l'autre plan de pivotement (7).

7. Dispositif de changement de rapport selon l'une des revendications précédentes, **caractérisé en ce que** le dispositif de palpage présente un capteur d'initialisation supplémentaire et **en ce que**, sur la plaque de protection (14) pivotante, une unité de codeur de signal (17) correspondant à ce capteur en position neutre ou de stationnement du dispositif de changement de rapport est prévue.

8. Dispositif de changement de rapport selon l'une des revendications précédentes, **caractérisé en ce que** le ou les capteurs (9, 10) destinés à détecter les positions des rapports individuels et l'unité à processeur (12) destinée à l'interprétation des signaux acquis sont fixés sur un circuit imprimé (2) incurvé disposé sur la boîte de vitesses.

9. Dispositif de changement de rapport selon l'une des revendications précédentes, **caractérisé en ce que** la plaque de protection (14) est réalisée sous la forme d'un élément de construction en forme de store à lamelles pour recouvrir l'évidement (4) dans le boîtier (1) qui accueille le levier de changement de vitesse (5).
